# EUROPÄISCHE PATENTANMELDUNG

(11) **EP 4 387 048 A1**
(43) Veröffentlichungstag der Anmeldung: **19.06.2024**
(21) Anmeldenummer: 23193906.7
(22) Anmeldetag: 29.08.2023
(51) Int. Cl.: H02J 50/20

(54) **SAMMELSCHIENE MIT KONTAKTLOSER KOPPLUNGSEINRICHTUNG, ELEKTRISCHES VERSORGUNGSSYSTEM UND LUFTFAHRZEUG**

(30) Priorität: 14.12.2022 DE 102022133286
(71) Anmelder: Airbus Operations GmbH, 21129 Hamburg (DE)
(72) Erfinder: HEGENBART, Matthias, 21129 Hamburg (DE); BENTHIEN, Hermann, 21129 Hamburg (DE)
(74) Vertreter: Isarpatent

(57) **Zusammenfassung**

Die vorliegende Erfindung schafft eine Sammelschiene (100) mit mindestens einer kontaktlosen Kopplungseinrichtung (110); einem Gehäuse (120), welches einen abgeschlossenen Innenraum (121) umgibt; und einer Vielzahl an in dem Innenraum (121) angeordneten Leiterschienen (130); wobei die Sammelschiene (100) eine längliche Form aufweist; und wobei die mindestens kontaktlose Kopplungseinrichtung (110) in dem Innenraum (121) angeordnet und dazu ausgebildet ist, elektrische Energie kontaktlos an eine Stromabnehmereinrichtung (200) zu übertragen Des Weiteren schafft die vorliegende Erfindung ein elektrisches Versorgungssystem (10) und ein Luftfahrzeug.

## Beschreibung

### TECHNISCHES GEBIET DER ERFINDUNG

Die vorliegende Erfindung betrifft eine Sammelschiene mit kontaktloser Kopplungseinrichtung, ein elektrisches Versorgungssystem, sowie ein Luftfahrzeug.

### HINTERGRUND DER ERFINDUNG

In Luftfahrzeugen wird ein möglichst geringes Gewicht der Gesamtkonstruktion angestrebt. Zusätzlich finden sich in Luftfahrzeugen auch eine Vielzahl an elektronischen Komponenten, welche zum einen mit Energie als auch mit Steuersignalen versorgt werden müssen. Hierfür können neben Kabeln auch Sammelschienen verwendet werden.

Um elektrische Energie von den Kabeln bzw. Sammelschienen elektrische Energie zu den entsprechenden elektronischen Komponenten zu bringen, müssen elektrische Kontakte hergestellt werden. Hierfür ist es notwendig, dass leitende Materialien zumindest zeitweise freiliegend angeordnet sind. An derartige Kontaktstellen sind besondere Anforderungen zu stellen, damit eine ordnungsgemäße Kontaktierung sichergestellt wird.

### ZUSAMMENFASSUNG DER ERFINDUNG

Vor diesem Hintergrund liegt der vorliegenden Erfindung die Aufgabe zu Grunde, eine zuverlässige elektrische Kontaktierung zu gewährleisten.

Diese Aufgabe wird gelöst durch eine Sammelschiene mit den Merkmalen des Patentanspruchs 1, ein elektrisches Versorgungssystem mit den Merkmalen des Patentanspruchs 5 sowie durch ein Luftfahrzeug mit den Merkmalen des Patentanspruchs 6.

Dementsprechend ist nach einem ersten Aspekt der Erfindung eine Sammelschiene mit mindestens einer kontaktlosen Kopplungseinrichtung, einem Gehäuse, welches einen abgeschlossenen Innenraum umgibt und einer Vielzahl an in dem Innenraum angeordneten Leiterschienen vorgesehen. Die Sammelschiene weist eine längliche Form auf. Die mindestens eine kontaktlose Kopplungseinrichtung ist in dem Innenraum angeordnet und dazu ausgebildet, elektrische Energie kontaktlos an eine Stromabnehmereinrichtung zu übertragen.

Nach einem zweiten Aspekt der Erfindung ist ein elektrisches Versorgungssystem mit einer erfindungsgemäßen Sammelschiene und mindestens einer Stromabnehmereinrichtung vorgesehen. Die Stromabnehmereinrichtung ist dazu ausgebildet und derart an der Sammelschiene befestigt, dass jede der mindestens einen Stromabnehmereinrichtung kontaktlos elektrische Energie von einer der mindestens einen kontaktlosen Kopplungseinrichtung empfangen kann.

Nach einem weiteren Aspekt der Erfindung ist ein Luftfahrzeug mit mindestens einer erfindungsgemäßen Sammelschiene oder mindestens einem erfindungsgemäßen elektrischen Versorgungssystem vorgesehen.

Eine der Ideen der vorliegenden Erfindung besteht darin, die von elektronischen Geräten benötigte elektrische Energie von der Sammelschiene zunächst kontaktlos an eine geeignete Stromabnehmereinrichtung. Hierdurch wird ermöglicht, das Gehäuse der Sammelschiene sowie die Stromabnehmereinrichtung abgeschlossen auszubilden, wodurch frei liegende elektrische Leiter vorteilhaft vermieden werden.

Gemäß eines Ausführungsbeispiels umfasst die mindestens eine kontaktlose Kopplungseinrichtung eine Transmissionsspule, welche mit der Vielzahl an Leiterschienen verbunden ist. Elektromagnetische Induktion mittels Transmissionsspulen ist eine vorteilhaft einfach umsetzbare Weise kontaktlos elektrische Energie zu übertragen.

Gemäß einer Weiterbildung umfasst die Sammelschiene weiterhin einen Hohlleiter, wobei der Hohlleiter entlang der Sammelschiene einen Hohlraum definiert, in welchem sich elektromagnetische Wellen im Wesentlichen verlustfrei ausbreiten können, und wobei der Hohlleiter mindestens eine Öffnung aufweist, durch welche der Hohlraum zugänglich ist. Mittels eines derartigen Hohlleiters können elektromagnetische Wellen zur kontaktlosen Übertragung elektrischer Signale verwendet werden, wodurch auf weitere Kabel und deren freiliegende Anschlüsse verzichtet werden kann.

Gemäß einer Weiterbildung weist die Sammelschiene weiterhin ein Versteifungselement auf, welches dazu ausgebildet ist eine strukturelle Integrität einer die Sammelschiene umfassenden Struktur zu verstärken. Auf diese Weise kann die Sammelschiene mit weiterer Funktionalität versehen werden, wodurch weitere, explizit nur für diesen Zweck vorgesehene Bauteile eingespart werden können.

In einem Ausführungsbeispiel des Luftfahrzeugs ist die mindestens eine Sammelschiene mit einem Rumpf, einem Kabinenboden und/oder mindestens einem Flügel des Luftfahrzeugs verbunden. Entlang dieser Strukturelemente eines Luftfahrzeugs sind in der Regel eine Vielzahl von Kabeln und ähnlichem zur Versorgung elektronischer Komponenten vorgesehen, was die Anordnung einer Sammelschiene an diesen Stellen besonders synergistisch vorteilhaft macht.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Luftfahrzeugs gemäß eines Ausführungsbeispiels der vorliegenden Erfindung;
- Fig. 2: eine schematische Querschnittsansicht einer Sammelschiene gemäß eines Ausführungsbeispiels der vorliegenden Erfindung;
- Fig. 3: eine schematische Querschnittansicht einer Sammelschiene gemäß einer Ausführungsform der vorliegenden Erfindung;
- Fig. 4a: eine schematische Seitenansicht eines elektrischen Versorgungssystems gemäß eines Ausführungsbeispiels der vorliegenden Erfindung; und
- Fig. 4b: eine schematische Querschnittansicht des elektrischen Versorgungssystems gemäß des Ausführungsbeispiels in Fig. 4a.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

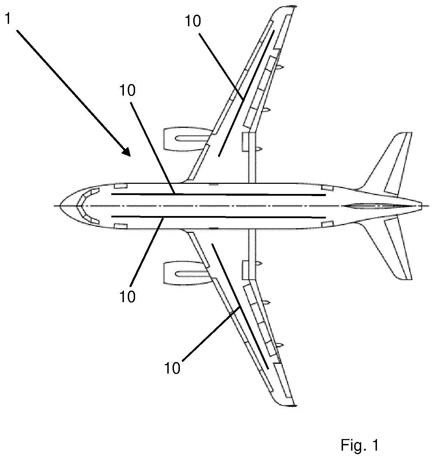

Fig. 1 zeigt eine schematische Darstellung eines Luftfahrzeugs 1 gemäß eines Ausführungsbeispiels der vorliegenden Erfindung.

Das in Figur 1 gezeigte Luftfahrzeug 1 weist eine Vielzahl von elektrischen Versorgungssystemen 10 auf, von denen insgesamt vier gezeigt sind. Zwei elektrische Versorgungssysteme 10 verlaufen hierbei entlang des Rumpfes des Luftfahrzeugs 1 und jeweils ein elektrisches Versorgungssystem 10 verläuft längs jedes der Flügel des Luftfahrzeugs 1.

Die Positionen der in Figur 1 gezeigten elektrischen Versorgungssysteme 10 deuten an, an welchen Stellen in einem Luftfahrzeug beispielsweise elektrische Leitungen angeordnet sein können. An diesen Stellen können also auch erfindungsgemäße elektrische Versorgungssysteme Anwendung finden um die im allgemeinen Teil beschriebenen synergistischen Effekte der vorliegenden Erfindung bestmöglich nutzen zu können.

Bei dem in Figur 1 gezeigten Luftfahrzeug sind elektrische Versorgungssysteme 10 genannt. Es ist allerdings auch denkbar, dass ein Luftfahrzeug 1 lediglich erfindungsgemäße Sammelschienen aufweist, falls etwa durch das Hinzufügen von Transceivern, die Bauteile erst nachträglich zu elektrischen Versorgungssystemen ergänzt werden sollen.

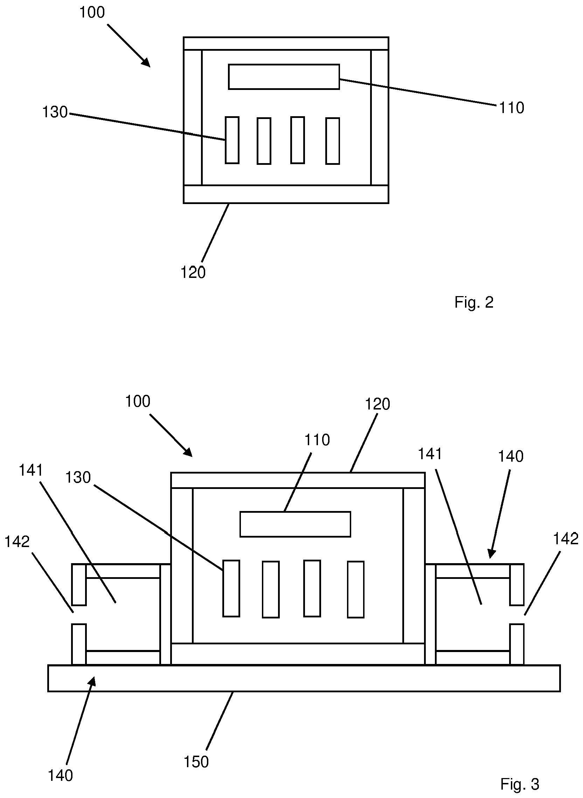

Fig. 2 zeigt eine schematische Querschnittsansicht einer Sammelschiene 100 gemäß eines Ausführungsbeispiels der vorliegenden Erfindung.

Die Sammelschiene 100 weist mindestens eine kontaktlose Kopplungseinrichtung 110, von denen aus Gründen der Übersichtlichkeit in Fig. 2 lediglich eine gezeigt werden kann, ein Gehäuse 120 und eine Vielzahl an in dem Gehäuse angeordneten Leiterschienen 130 auf.

Das Gehäuse 120 umschließt in dem gezeigten Ausführungsbeispiel einen abgeschlossenen Innenraum 121, in welchem die mindestens eine kontaktlose Kopplungseinrichtung 110 sowie die Vielzahl an Leiterschienen 130 angeordnet sind.

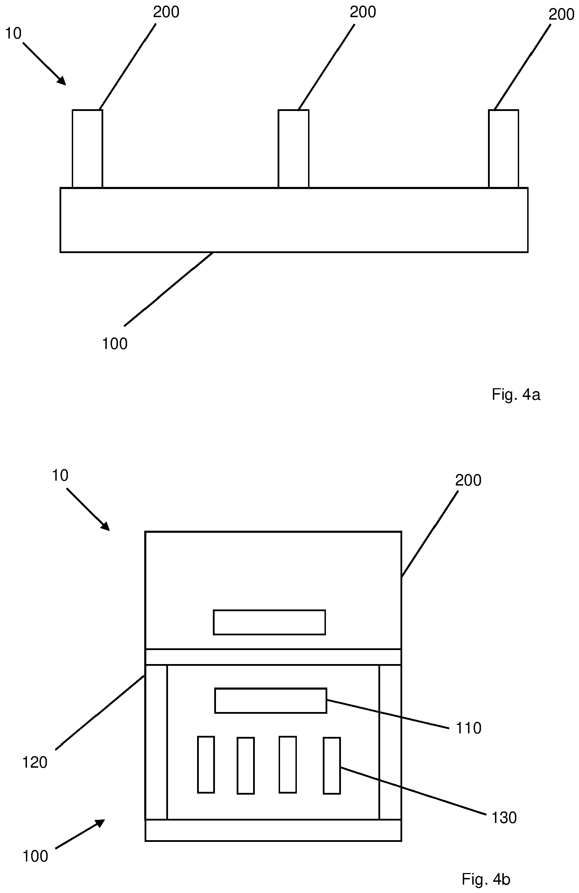

Die kontaktlose Kopplungseinrichtung 110 ermöglicht die Ausführung des Gehäuses 120 ohne jegliche Öffnungen, da elektrische Energie von der Vielzahl an Leiterschienen 130 ohne direkten Kontakt an eine externe Stromabnehmereinrichtung abgegeben werden kann. Dieses Prinzip wird in Zusammenhang mit den Fig. 4a und 4b näher erläutert.

Fig. 3 zeigt eine schematische Querschnittansicht einer Sammelschiene 100 gemäß eines Ausführungsbeispiels der vorliegenden Erfindung.

Die Sammelschiene 100 weist eine kontaktlose Kopplungseinrichtung 110, ein Gehäuse 120, eine Vielzahl an in dem Gehäuse 120 angeordneten Leiterschienen 130, zwei Hohlleiter 140, sowie ein Versteifungselement 150 auf. Die Hohlleiter 140 sind jeweils an einer Seite des Gehäuses 120 angeordnet und weisen jeweils einen rechteckigen Rahmen auf, durch welchen der jeweilige Hohlraum 141 definiert wird. Die jeweiligen Öffnungen 142 sind zu den jeweiligen Seite hin ausgebildet. Das Versteifungselement 150 ist als eine an einer unteren Seite des Gehäuses 120 angeordneten Platte ausgebildet.

Durch Auswahl geeigneter Materialien der Sammelschiene 100, insbesondere des Hohlleiters 140 und aller Teilbereiche des Gehäuses 120, welche dazu beitragen den Hohlraum 141 zu definieren, wird ermöglicht, dass sich elektromagnetische Wellen innerhalb des Hohlraums verlustfrei ausbreiten können. Unter "verlustfrei" ist hier zu verstehen, dass zum einen die Intensität der elektromagnetischen Wellen bei der Ausbreitung durch den Hohlleiter nicht abnimmt, aber auch zugleich, dass kein Anteil der sich ausbreitenden elektromagnetischen Wellen sich außerhalb des Hohlleiters ausbreitet. Durch geeignete Ausbildung der Ausmaße der Öffnung 142, kann dies gewährleistet werden und gleichzeitig ein Zugang zum Hohlraum 141 für etwa Transceiver ermöglicht werden, wie in Bezug auf die Fig. 4a und 4b näher erläutert.

Aus Fig. 3 geht nicht eindeutig hervor, wie die mindestens eine Öffnung 142 ausgebildet ist. Es ist möglich, dass ein einzelner Spalt vorgesehen ist, der sich entlang der gesamten Länge des Hohlleiters 140 erstreckt. Es ist aber auch möglich, dass eine Vielzahl an Löchern entlang des Hohlleiters vorgesehen sind. Durch die mindestens eine Öffnung 142 kann ein nicht gezeigter Transceiver sich in dem Hohlraum 141 ausbreitende elektromagnetische Wellen empfangen, bzw. elektromagnetische Wellen in den Hohlraum 141 einspeisen.

Als Materialien für den Hohlleiter 140 bzw. das Gehäuse 120 sind beispielsweise Metalle und mit Metall überzogene Verbundbaustoffe besonders vorteilhaft. Reine Metalle lassen sich vorteilhaft leicht formen, was den Fertigungsprozess der Sammelschiene 100 erleichtert. Insbesondere wenn der Hohlleiter 140 als separates Element ausgebildet wird, welches mit dem Rest der Sammelschiene 100 nach dessen Fertigung verbunden wird. Mit Metall überzogene Verbundbaustoffe weisen ein vorteilhaft geringes Gewicht auf.

Das Versteifungselement 150 kann an einer Oberfläche einer Struktur befestigt werden. Daraus resultiert eine lokal höhere Dicke der sich daraus ergebenden Gesamtstruktur, welche daher an dieser Stelle eine höhere Steifigkeit aufweist.

Fig. 4a und 4b zeigen schematische Darstellungen eines elektrischen Versorgungssystems 10 gemäß eines Ausführungsbeispiels der vorliegenden Erfindung, wobei Fig. 4a eine Draufsicht und Fig. 4b eine Querschnittsansicht des elektrischen Versorgungssystems 10 zeigt.

Das elektrische Versorgungssystem 10 weist eine Sammelschiene 100 und eine Vielzahl an Stromabnehmereinrichtungen 200 auf. In dem hier gezeigten Ausführungsbeispiel sind insgesamt drei Stromabnehmereinrichtungen 200 vorgesehen, zwei Stromabnehmereinrichtungen 200jeweils an den Enden der Sammelschiene 100 und eine Stromabnehmereinrichtung 200 an einer zentralen Stelle.

Die Sammelschiene 100 weist eine Vielzahl an kontaktlosen Kopplungseinrichtungen 110, ein Gehäuse 120 und eine Vielzahl an in dem Gehäuse 120 angeordneten Leiterschienen 130 auf. Das Gehäuse 120 umschließt in dem gezeigten Ausführungsbeispiel einen abgeschlossenen Innenraum 121, in welchem die mindestens eine kontaktlose Kopplungseinrichtung 110 sowie die Vielzahl an Leiterschienen 130 angeordnet sind.

Generell sollte zumindest für jede der Stromabnehmereinrichtungen 200 eine kontaktlose Kopplungseinrichtung 110 vorgesehen sein. Es können allerdings auch mehr kontaktlose Kopplungseinrichtungen 110 vorgesehen sein, so dass die Positionen der Stromabnehmereinrichtungen erst bei Zusammenfügen des elektrischen Versorgungssystems 10 gewählt werden müssen.

In den Fig. 4a und 4b wird nicht explizit gezeigt, wie die Stromabnehmereinrichtungen 200 mit der Sammelschiene 100 verbunden sind, da es hierfür eine große Vielzahl an Möglichkeiten gibt. So können etwa Schrauben, Nieten oder Klebmittel für die Befestigung verwendet werden. Auch sind Steckverbindungen denkbar.

In dem gezeigten Ausführungsbeispiel umfassen die mindestens eine kontaktlose Kopplungseinrichtung 110 sowie die Stromabnehmereinrichtungen 200 komplementäre Transmissionsspulen. Die mindestens eine kontaktlosen Kopplungseinrichtung 110 ist mit der Vielzahl an Leiterschienen 130 verbunden, wobei diese Verbindungen aus Gründen der Übersichtlichkeit nicht gezeigt sind. Über diese Verbindungen kann die mindestens eine kontaktlose Kopplungseinrichtung 110 einen elektromagnetischen Schwingkreis betreiben. Hierdurch wird in der Transmissionsspule ein variables Magnetfeld aufgebaut, welches wiederum in der entsprechenden Transmissionsspule der zugehörigen Stromabnehmereinrichtung 200 einen Wechselstrom induziert. Mit diesem Wechselstrom können dann mit der Stromabnehmereinrichtung verbundene elektronische Geräte betrieben werden.

Generell können die Leiterschienen einer Sammelschiene innerhalb des Gehäuses in einem Isolatormaterial eingebettet sein, insbesondere wenn das Gehäuse selbst zumindest teilweise aus einem leitenden Material gefertigt ist oder ein solches beinhaltet. Lediglich aus Gründen der Übersichtlichkeit ist in den Figuren kein solches Isolatormaterial abgebildet.

In dieser Anmeldung wurde die vorliegende Erfindung im Kontext eines Luftfahrzeuges beschreiben. Die hier beschriebenen Bauteile und Datenübertragungssysteme lassen sich jedoch in allen Bereichen einsetzen. In welchen strukturfestigende Bauteile und Datenübertragungsleitungen vorgesehen werden, insbesondere in allen Arten von Land-, Wasser- und Raumfahrzeugen.

### BEZUGSZEICHENLISTE

- 1: Luftfahrzeug
- 10: Elektrisches Versorgungssystem
- 100: Sammelschiene
- 110: kontaktlose Kopplungseinrichtung
- 120: Gehäuse
- 121: Innenraum
- 130: Leiterschiene
- 140: Hohlleiter
- 141: Hohlraum
- 142: Öffnung
- 150: Versteifungselement
- 150: Befestigungseinrichtung
- 200: Stromabnehmereinrichtung

## Patentansprüche

1. Sammelschiene (100) mit
mindestens einer kontaktlosen Kopplungseinrichtung (110);
einem Gehäuse (120), welches einen abgeschlossenen Innenraum (121) umgibt; und
einer Vielzahl an in dem Innenraum (121) angeordneten Leiterschienen (130);
wobei die Sammelschiene (100) eine längliche Form aufweist; und
wobei die mindestens kontaktlose Kopplungseinrichtung (110) in dem Innenraum (121) angeordnet und dazu ausgebildet ist, elektrische Energie kontaktlos an eine Stromabnehmereinrichtung (200) zu übertragen.

2. Sammelschiene nach Anspruch 1,
wobei die mindestens eine kontaktlose Kopplungseinrichtung (110) eine Transmissionsspule (111) umfasst, welche mit der Vielzahl an Leiterschienen (130) verbunden ist.

3. Sammelschiene nach einem der Ansprüche 1 oder 2, weiterhin umfassend einen Hohlleiter (140);
wobei der Hohlleiter (140) entlang der Sammelschiene (100) einen Hohlraum (141) definiert, in welchem sich elektromagnetische Wellen im Wesentlichen verlustfrei ausbreiten können, und
wobei der Hohlleiter (140) mindestens eine Öffnung (142) aufweist, durch welche der Hohlraum (141) zugänglich ist.

4. Sammelschiene (100) nach einem der Ansprüche 1 bis 3, weiterhin aufweisend ein Versteifungselement (150), welches dazu ausgebildet ist eine strukturelle Integrität einer die Sammelschiene (100) umfassenden Struktur zu verstärken.

5. Elektrisches Versorgungssystem (10) mit einer Sammelschiene (100) nach einem der Ansprüche 1 bis 4 und mindestens einer Stromabnehmereinrichtung (200), welche dazu ausgebildet und derart an der Sammelschiene (100) befestigt ist, dass jede der mindestens einen Stromabnehmereinrichtung (200) kontaktlos elektrische Energie von einer der mindestens einen kontaktlosen Kopplungseinrichtung (110) empfangen kann.

6. Luftfahrzeug (1) mit mindestens einer Sammelschiene (100) nach einem der Ansprüche 1 bis 4 oder mindestens einem elektrischen Versorgungssystem (10) nach Anspruch 5.

7. Luftfahrzeug (1) nach Anspruch 6, wobei die mindestens eine Sammelschiene (100) mit einem Rumpf, einem Kabinenboden und/oder mindestens einem Flügel des Luftfahrzeugs verbunden ist.
